# EUROPEAN PATENT APPLICATION

(11) **EP 3 703 154 A1**
(43) Date of publication of application: **02.09.2020**
(21) Application number: 19193234.2
(22) Date of filing: 23.08.2019
(51) Int. Cl.: H01M 2/10

(54) **BATTERY MODULE**

(30) Priority: 26.02.2019 CN 201910141030
(71) Applicant: Contemporary Amperex Technology Co., Limited, Jiaocheng District Ningde City, Fujian 352100 (CN)
(72) Inventor: CHEN, Sien, Ningde City, Fujian 352100 (CN); XU, Shoujian, Ningde City, Fujian 352100 (CN); FENG, Chunyan, Ningde City, Fujian 352100 (CN)
(74) Representative: Botti, Mario

(57) **Abstract**

A battery module is provided, including: a battery group, including a plurality of batteries that is stacked; two end plates, respectively disposed at two ends of the battery group along a direction in which the plurality of batteries is stacked; and a connecting member, connecting the two end plates. Each of the two end plates has a middle section and thinned sections respectively located at two sides of the middle section in a length direction Y. A thickness of each of the thinned sections is smaller than a thickness of the middle section. Each of the thinned sections is provided with at least one strengthened portion protruding from an outer side surface of the thinned section. In the present disclosure, an overall weight of the battery module can be reduced when the thinned section has a smaller thickness than the middle section.

## Description

### TECHNICAL FIELD

The present disclosure relates to the field of battery technologies, and in particular, to a battery module.

### BACKGROUND

A battery module includes a plurality of battery groups that are stacked, and a case. The case is used to provide frame protection and mechanical strength assurance for the battery group. The battery group is placed in the case and supported by the case. The case includes a pair of end plates respectively located at two ends of the battery group, and a pair of side plates for connecting the pair of end plates together.

When the battery is charged and discharged, each single battery will expand. Since the batteries of the battery group are stacked, under coaction of the expansion due to charging and discharging of single batteries of the battery group, the two ends of the battery group will expand. The end plates located at the two ends of the battery group are used to suppress expansion of the battery group. As a result, the end plates are subjected to an expansion force from the battery group.

In the related art, a thickness of the end plate is uniform. For a structural design of the end plate, it is necessary to find the weakest portion that is most easily deformed when the end plate is subjected to a force. When the battery group expands, a thickness of the weakest point needs to withstand a maximum expansion force applied on the end plate by the battery.

However, since the force applied on the end plate by the battery is large at a middle position and is small at two sides when the battery expands, a uniform thickness of the end plate is a redundant design. Moreover, the end plate is generally an aluminum alloy structural member, the weight of the end plate accounts for a large proportion of the weight of the entire battery module.

### SUMMARY

In view of this, the present disclosure provides a battery module. The battery module includes: a battery group including a plurality of batteries that is stacked; two end plates respectively disposed at two ends of the battery group along a direction in which the plurality of batteries is stacked; and a connecting member connecting the two end plates. Each of the two end plates has a middle section and thinned sections respectively located at two sides of the middle section in a length direction Y, and a thickness of each of the thinned sections is smaller than a thickness of the middle section. Each of the thinned sections is provided with at least one strengthened portion protruding from an outer side surface of the thinned section.

Optionally, the at least one strengthened portion includes at least one reinforcing rib extending along a width direction Z of the end plate.

Optionally, for each of the two end plates, the at least one strengthened portion is disposed at an end of the end plate in the length direction Y.

Optionally, for each of the two end plates, the at least one strengthened portion is disposed perpendicular to outer side surface of the thinned section.

Optionally, the at least one strengthened portion is disposed perpendicular to an inner side surface of the thinned section.

Optionally, the at least one strengthened portion does not protrude beyond an outer side surface of the middle section.

Optionally, an inner side surface of the middle section is flush with an inner side surfaces of the thinned section.

Optionally, a thickness of each of the thinned sections is gradually reduced along a direction from the middle section towards the thinned section.

Optionally, the thinned sections are symmetrically disposed at the two sides of the end plate; and/or, the two end plates are symmetrically disposed at the two ends of the battery group.

Optionally, the connecting member includes two side plates respectively disposed at two sides of the battery group, each of the two side plates connecting the two end plates.

For the battery module provided by embodiments of the present disclosure, an overall weight of the battery module can be reduced when the thinned section has a smaller thickness than the middle section. At least one strengthened portion protrudes from the outer side surface of the thinned section to increase the bending resistance of the thinned section. When the thinned section is subjected to an external force, the thinned section with increased bending resistance will not be bent or even broken under the action of the external force, and thus not causing damage to the interior of the battery group, thereby prolonging a service life of the battery module.

### BRIEF DESCRIPTION OF DRAWINGS

In order to more clearly illustrate technical solutions in embodiments of the present disclosure, the accompanying drawings used in the embodiments are briefly introduced as follows. It should be noted that the drawings described as follows are merely part of the embodiments of the present disclosure, other drawings can also be acquired by those skilled in the art without paying creative efforts.
FIG. 1 is a schematic structural diagram of a battery module according to an embodiment of the present disclosure;
FIG. 2 is an exploded view of parts of the battery module shown in FIG. 1;
FIG. 3 is a top view of the battery module shown in FIG. 1;
FIG. 4 is a schematic structural diagram of an end plate according to another embodiment of the present disclosure;
FIG. 5 is a schematic structural diagram of an end plate according to still another embodiment of the present disclosure; and
FIG. 6 is a schematic structural diagram of an end plate according to yet another embodiment of the present disclosure.

### Reference signs:

1-battery group;
10-battery;
2-end plate;
20-middle section;
22-thinned section;
24-strengthened portion;
27-lightening hole;
28-inner side surface;
29-outer side surface;
3-connecting member.

### DESCRIPTION OF EMBODIMENTS

For better illustrating technical solutions of the present disclosure, embodiments of the present disclosure will be described in detail as follows with reference to the accompanying drawings.

It should be noted that, the described embodiments are merely exemplary embodiments of the present disclosure, which shall not be interpreted as providing limitations to the present disclosure. All other embodiments obtained by those skilled in the art without creative efforts according to the embodiments of the present disclosure are within the scope of the present disclosure.

The terms used in the embodiments of the present disclosure are merely for the purpose of describing particular embodiments but not intended to limit the present disclosure. Unless otherwise noted in the context, the singular form expressions "a", "an", "the" and "said" used in the embodiments of the present disclosure and the appended claims are also intended to represent plural form expressions thereof.

It should be understood that the term "and/or" used herein is merely an association relationship describing associated objects, indicating that there may be three relationships, for example, A and/or B may indicate three cases, i.e., A existing individually, A and B existing simultaneously, B existing individually. In addition, the character "/" herein generally indicates that the related objects before and after the character form an "or" relationship.

It should be noted that, in the context, while referring to an element being formed "above" or "below" another element, it is possible that the element is directly formed "above" or "below" the other element, it is also possible that the element is formed "above" or "below" the other element via an intermediate element.

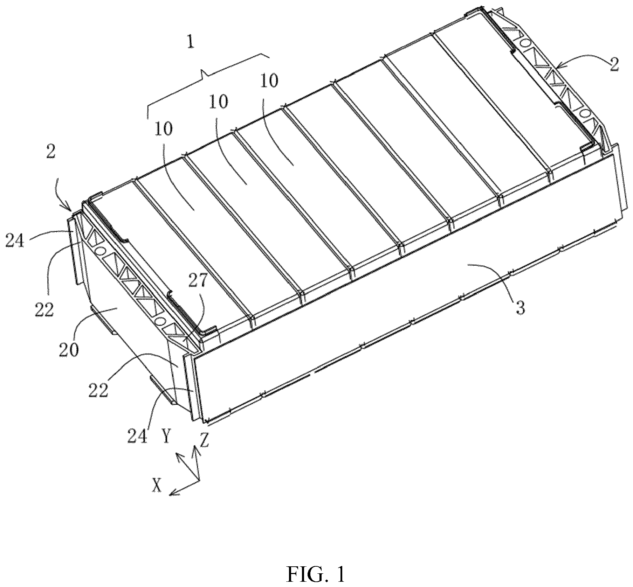

According to an embodiment of the present disclosure, a battery module assembling apparatus is provided. With reference to FIG. 1 to FIG. 3, the battery module includes a battery group 1, two end plates 2, and a connecting member 3. The battery group 1 includes a plurality of batteries 10 that are stacked. The battery module has a thickness direction X, a length direction Y, and a width direction Z. The batteries of the battery group 1 are stacked along the thickness direction X. The two end plates 2 are respectively located at two ends of the battery group 1 along the stacking direction. The two end plates 2 are connected to each other by the connecting member 3.

Each end plate 2 has a thickness along the thickness direction X of the battery module, and the end plate 2 has an inner side surface 28 and an outer side surface 29 that are located at two sides of the end plate 2 in its thickness direction X. The inner side surface 28 of the end plate 2 is located at a side of an end of the battery group 1 in the thickness direction X, and the two inner side surfaces 28 of the two end plates 2 are facing toward each other, so as to suppress outward expansion and deformation of the two ends of the battery group 1. In this embodiment, an insulating cover is further provided between the end plate 2 and the battery group 1. The insulating cover and the battery group 1 are tightly clamped between the two end plates 2.

Each end plate 2 has a length along the length direction Y of the battery module. The end plate 2 has a middle section 20 and thinned sections 22 located at two sides of the middle section 20 in the length direction Y. The inner side surface 28 of the middle section 20 is flush with the inner side surfaces 28 of the thinned sections 22 located at two sides of the middle section 20 so as to suppress outward expansion and deformation of the two ends of the battery group 1.

The thickness of the thinned section 22 is designed to be smaller than the thickness of the middle section 20. The outer side surface 29 of the middle section 20 is not flush with the outer side surface 29 of the thinned section 22. Under coaction of expansion due to charging and discharging of single batteries 10 of the battery group 1, an expansion force applied on the end plate 2 by the battery group 1 is large in the middle section and is small at the two sides thereof. Correspondingly, an expansion force F1 applied on the middle section 20 by the battery group 1 is larger than an expansion force F2 applied on the thinned section 22 by the battery group 1.

The middle section 20 is designed to be thicker so as to suppress outward expansion of a portion of the battery group 1 facing towards the middle section 20, and the thinned section 22 is designed to be thinner so as to suppress outward expansion of a portion of the battery group 1 facing toward the thinned section 22. In this way, the end plate 2 having varying thickness can suppress outward expansion of the end of the battery group 1, thereby reducing a weight ratio of the end plate 2 accounting for the battery module.

However, the inventors of the present disclosure have found that although an overall weight of the battery module is reduced when the thinned section 22 has a smaller thickness than the middle section 20, a strength of the thinned section 22 is correspondingly reduced. When the battery module is subjected to an external force, it is easy to damage the thinned section 22 and the battery group 1. In this embodiment, at least one strengthened portion 24 is provided at the thinned section 22. The strengthened portion 24 protrudes from the outer side surface 29 of the thinned section 22. The strengthened portion 24 is used to increase bending resistance of the thinned section 22. When the thinned section 22 is subjected to an external force, the thinned section 22 with increased bending resistance is less likely to be bent or even broken under the action of the external force, and thus will not cause damage to the battery group 1 in its interior, thereby prolonging a service life of the battery module.

The strengthened portion 24 can be selected according to the external force condition subjected by the thinned section 22. In order to better illustrate a specific structure and usage of the thinned section 22 and the strengthened portion 24 in the embodiments of the present disclosure, the battery module will be further described in the following.

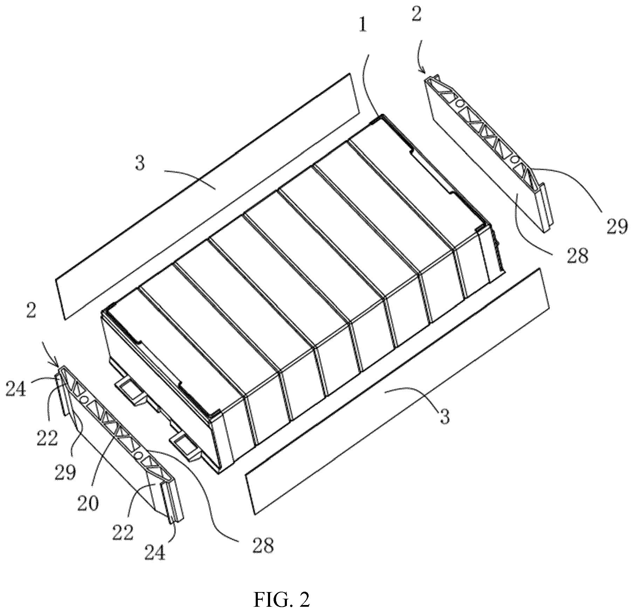

The structure of the connecting member 3 can be specifically designed as needed, and the two end plates 2 can be connected to each other by the connecting member 3, so that the end plates 2 can suppress outward expansion and deformation of the two ends of the battery group 1. In an optional example, with further reference to FIG. 2, the connecting member 3 includes two side plates, which are located at two sides of the battery group 1 in the length direction Y. Two ends of each side plate are respectively connected to the two end plates 2, thereby connecting the two end plates 2 together. In this way, the two end plates 2 and the two side plates are connected to form a frame surrounding the battery group 1, so as to house the battery group 1. In this way, the two end plates 2 are located at the two ends of the battery group 1 for suppressing outward expansion and deformation of the two ends of the battery group 1. Moreover, the connecting member 3 can also be designed as a strap or other connecting member that connects the two end plates 2 together.

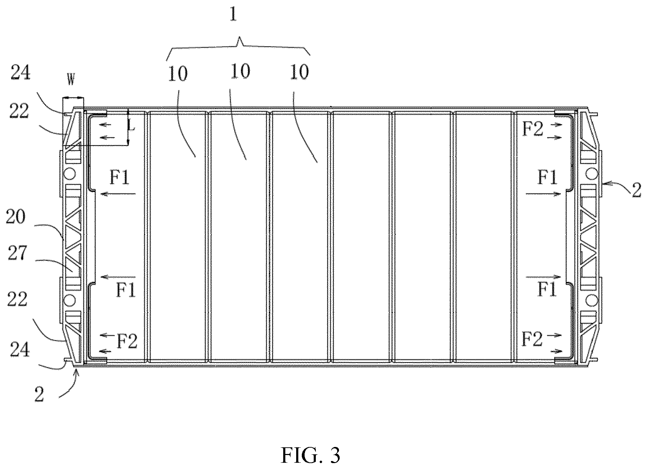

According to a force magnitude applied on the end plate 2 during charging and discharging of the battery group 1, the thickness of the thinned section 22 can be correspondingly designed. In an optional example, with further reference to FIG. 3, during charging and discharging of the battery group 1, the force applied on the end plate 2 is gradually reduced along a direction from the middle section 20 towards the thinned section 22. Thus, the thickness of the thinned section 22 is correspondingly designed to be gradually reduced along the direction from the middle section 20 towards the thinned section 22. In this way, the thickness of the thinned section 22 is corresponding to the force magnitude applied on the thinned section 22 along the direction from the middle section 20 towards the thinned section 22, thereby reducing the weight of the end plate 2 as much as possible.

The end plate 2 has a width along the width direction Z of the battery module. In an example, an end surface of the battery group 1 and the end plate 2 may be correspondingly designed as a square shape. According to distribution of the expansion force applied on the end plate 2 during charging and discharging of the battery group 1, the thinned section 22 may extend for a given distance along the length direction Y.

The structure of the strengthened portion 24 can be selected as needed, as long as the strengthened portion 24 can increase the bending resistance of the thinned section 22.

In an optical example, the strengthened portion 24 may be designed as an elongated reinforcing rib extending along the width direction Z of the end plate 2. The elongated reinforcing rib extending along the width direction Z of the end plate 2 can effectively enhance the bending resistance of the thinned section 22, and can effectively prevent the thinned section 22 from being bent, twisted, or even broken in the width direction Z.

However, when the end plate 2 is bent and deformed by an external force or is bent and deformed by the expansion force from the battery group 1, the end plate 2 is easily broken in the length direction Y thereof. A possible breaking position of the end plate 2 is located at the thinned section 22 having the thinner thickness, which is the weak portion of the thinned section 22. Correspondingly, in order to suppress breaking of the end plate 2, the strengthened portion 24 may be disposed at the weak portion of the thinned section 22 for preventing the thinned section 22 from being broken in the length direction Y of the end plate 2, thereby prolonging the service life of the battery module.

According to different structures of the battery module and force conditions, the weak portion of the thinned section 22 will be different. The weak portion will be illustrated in the following by way of example, and the strengthened portion 24 is correspondingly disposed at the weak portion of the thinned section 22.

In an optical example, with further reference to FIG. 3, the end plate 2 is prone to breaking at a position adjacent to an end of the end plate 2 in the length direction Y. The weak portion is adjacent to the end of the end plate 2. A strengthened portion 24 is correspondingly provided at a position of the thinned section 22 adjacent to the end of the end plate 2.

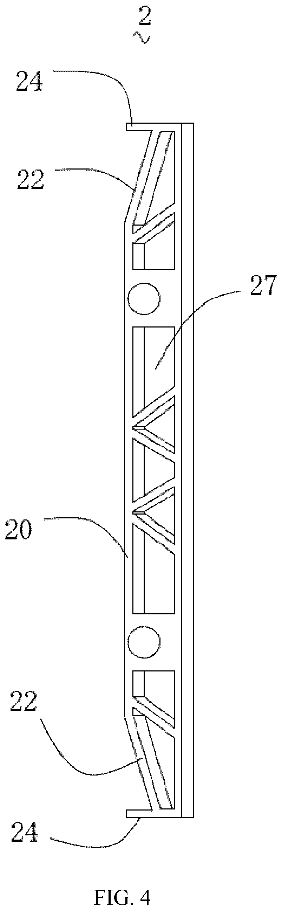

In another optical example, with further reference to FIG. 4, the end plate 2 is prone to breaking at an end of the end plate 2 along the length direction Y. The weak portion is located at the end of the end plate 2 along the length direction Y. A strengthened portion 24 is correspondingly provided at an end of the end plate 2 in the length direction Y, thereby preventing the thinned section 22 from being broken in the length direction Y, thereby prolonging the service life of the battery module.

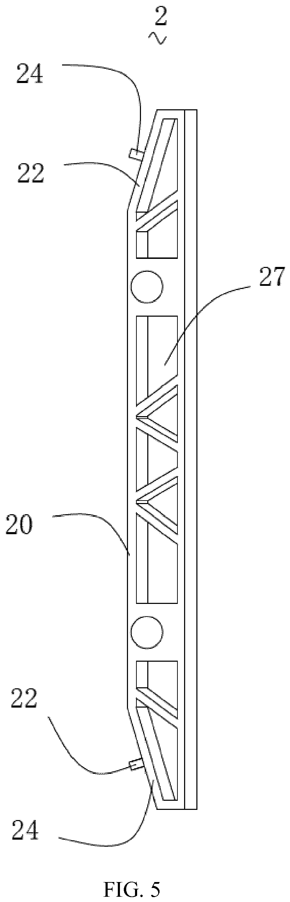

In still another optional example, with further reference to FIG. 5, the end plate 2 is prone to breaking at a middle position of the thinned section 22 along the length direction Y. The weak portion is located at the middle position of the thinned section 22. A strengthened portion 24 is correspondingly provided at the middle position of the thinned section 22, thereby preventing the thinned section 22 from being broken in the length direction Y, and thus prolonging the service life of the battery module.

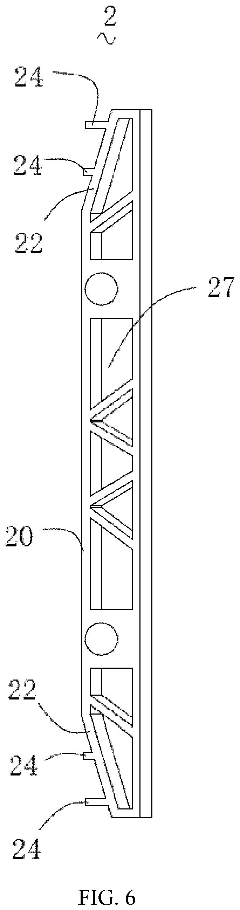

In one embodiment, one or more of the above examples are adopted at the same time. As shown in FIG. 6, a strengthened portion 24 is respectively provided at an middle position of the thinned section 22 and a position adjacent to the end of the end plate 2, thereby preventing the thinned section 22 from being broken in the length direction Y of the end plate 2, and thus prolonging the service life of the battery module.

Considering that the two end plates 2 are disposed at two end surfaces of the battery group 1, and considering distribution of the expansion force applied on the end plate 2 when the battery group 1 expands, the structures of the end plates 2 located at the two ends of the battery group 1 can be symmetrically designed, and thus the thinned sections 22 and the strengthened portions 24 of the two end plates 2 located at two ends can be symmetrically designed.

The end plates 2 located at two ends of the battery group 1 have a same structure, so that the end plates 2 located at two ends of the battery group 1 can be used interchangeably, which facilitates manufacture and assembling.

The strengthened portion 24 and the thinned section 22 can be integrally formed. For example, the end plate 2 may be made of a metal material having a strong strength, and the end plate 2 may be integrally extruded and formed with a middle section 20, a thinned section 22, and a strengthened portion 24.

A direction along which the strengthened portion 24 protrudes outward from the thinned section 22 can be designed as needed.

In an optical example, with further reference to FIG. 3, the strengthened portion 24 may protrude along a direction perpendicular to the inner side surface 28 of the thinned section 22.

In another optical example, with further reference to FIG. 5, the strengthened portion 24 may protrude along a direction perpendicular to the outer side surface 29 of the thinned section 22.

The strengthened portion 24 does not protrude beyond the outer side surface 29 of the middle section 20. During assembly of the battery module with other adjacent components, the strengthened portion 24 will not interfere with other adjacent components. For example, when multiple battery modules are assembled together, the strengthened portion 24 of any one of the battery modules does not interfere with the end plate 2 of another battery module adjacent thereto.

Further, the end plate 2 may be provided with a lightening hole 27 extending in the width direction Z. The lightening hole 27 may penetrate through the end plate 2, and the lightening hole 27 can reduce the weight of the end plate2.

The above-described embodiments are merely preferred embodiments of the present disclosure and are not intended to limit the present disclosure. Any modifications, equivalent substitutions and improvements made within the principle of the present disclosure shall fall into the protection scope of the present disclosure.

## Claims

1. A battery module, comprising:
a battery group (1) comprising a plurality of batteries (10) that is stacked;
two end plates (2) respectively disposed at two ends of the battery group (1) along a direction in which the plurality of batteries is stacked; and
a connecting member (3) connecting the two end plates (2),
wherein each of the two end plates (2) comprises a middle section (20) and thinned sections (22) respectively located at two sides of the middle section (20) in a length direction Y, and a thickness of each of the thinned sections (22) is smaller than a thickness of the middle section (20); and
each of the thinned sections (22) is provided with at least one strengthened portion (24) protruding from an outer side surface (29) of the thinned section (22).

2. The battery module according to claim 1, wherein the at least one strengthened portion (24) comprises at least one reinforcing rib extending along a width direction Z of the end plate (2).

3. The battery module according to claim 2, wherein for each of the two end plates (2), the at least one strengthened portion (24) is disposed at an end of the end plate (2) in the length direction Y.

4. The battery module according to claim 2, wherein for each of the two end plates (2), the at least one strengthened portion (24) is disposed perpendicular to the outer side surface (29) of the thinned section (22).

5. The battery module according to claim 2, wherein the at least one strengthened portion (24) is disposed perpendicular to an inner side surface (28) of the thinned section (22).

6. The battery module according to claim 1, wherein the at least one strengthened portion (24) does not protrude beyond an outer side surface (29) of the middle section (20).

7. The battery module according to any one of claims 1-6, wherein an inner side surface (28) of the middle section (20) is flush with an inner side surface (28) of the thinned section (22).

8. The battery module according to claim 1, wherein a thickness of each of the thinned sections (22) is gradually reduced along a direction from the middle section (20) towards the thinned section (22).

9. The battery module according to claim 1, wherein the thinned sections (22) are symmetrically disposed at the two sides of the end plate (2); and/or,
the two end plates (2) are symmetrically disposed at the two ends of the battery group (1).

10. The battery module according to claim 1, wherein the connecting member (3) comprises two side plates respectively disposed at two sides of the battery group (1), each of the two side plates connecting the two end plates (2).
